# EUROPEAN PATENT SPECIFICATION

(11) **EP 0 491 684 B1**
(45) Date of publication and mention of the grant of the patent: **13.08.1997**
(21) Application number: 89910576.1
(22) Date of filing: 11.09.1989
(51) Int. Cl.: G05D 7/01, G05D 16/10

(54) **FLOW CONTROL SYSTEM**
EINRICHTUNG ZUR REGELUNG EINES FLUIDMENGENFLUSSES
SYSTEME DE COMMANDE D'ECOULEMENT

(43) Date of publication of application: 01.07.1992
(73) Proprietor: PALMER, David W., North Andover, MA 01845 (US)
(72) Inventor: PALMER, David W., North Andover, MA 01845 (US)
(74) Representative: Overbury, Richard Douglas
(86) International application number: US8903928
(87) International publication number: WO9103781

(56) References cited:
- EP-A- 0 275 361
- WO-A-87/05375
- DE-C- 532 356
- US-A- 3 053 272
- US-A- 3 138 174
- US-A- 3 237 616
- US-A- 4 791 956

## Description

### Technical Field

This invention generally relates to a device for regulating the flow of a fluid, in particular a gas, through the device. More particularly, it relates to a device that can maintain a constant a partial vacuum and/or a constant mass flow rate.

### Background Art

In the manufacture of integrated circuits on semiconductor chips, the need arises for accurately controlling the flow of air or gas. For instance, several steps in this manufacturing process occur in a work environment that must be kept at a partial vacuum with respect to the ambient pressure. In a clean room this ambient pressure is slightly more than atmospheric pressure. Gas is evacuated from this work environment to a house exhaust system. Frequently, the house exhaust system evacuates gas from a number of work environments. Because the vacuum created by the house exhaust system can vary, and because the number of work environments connected to the house exhaust system can vary, each work environment needs a control system in order to avoid wide variations in the partial vacuum in the work environment and/or to control the mass flow rate of gas from the work environment to the house exhaust system. It is often very important to accurately control either the partial vacuum or the mass flow rate; too much or too little gas being evacuated from the work environment can affect the yield rate or endanger personnel working nearby.

A commercially available system for controlling air flow through work environments to the exhaust system uses a microprocessor, receiving air flow information from a sensor similar to a hot wire anemometer, to control a motor-driven damper. A fault of such a system is that, if the temperature of a gas in the exhaust flow being measured changes, the sensor perceives a change in air flow velocity and a spurious adjustment is triggered. Also, if the composition of the exhaust gas changes, the sensor again incorrectly perceives a change in air flow velocity and a spurious adjustment is triggered. Additionally, if the sensor becomes coated with residue produced during the coating process, the sensor incorrectly perceives a change in the air flow velocity and a spurious adjustment is triggered. Any of these things is very likely to happen in the manufacture of integrated circuits. Furthermore, the spurious adjustments that are triggered are likely to occur at a point in time when the process is most sensitive to air flow instability, which results in compromised product yield. Finally, flammable solvents are commonly used during the manufacturing process and when the processing equipment is cleaned, and therefore, the hot wire anemometer and the circuitry of the flow control system pose a potential risk by being located in an air stream laden with flammable solvents.

Other devices, such as those disclosed in US-A-3,766,933, issued to Nicholson, US-A-4,092,998 issued to Taplin, US-A-4,592,385 issued to Semon, and GB-A-957,118 issued to Decca, Ltd., have been designed to regulate vacuums or high pressure. However, these devices cannot regulate a partial vacuum or mass flow rate accurately enough for the aforementioned manufacturing processes.

GB-A-957,118 discloses a vacuum regulating device utilising a diaphragm member in a valve which is acted upon directly by a vacuum source and a spring member. The balance between the two forces controls the movement of the member and hence the degree of vacuum in the outlet from the valve chamber.

US-A-3,766,933 (the features thereof correspond to the preamble of claim 1) discloses a vacuum control device located between the flat box of a paper making machine and a vacuum header to control the vacuum in the flat box. The device includes a control cavity linking the flat box and the vacuum header. The control cavity is in communication with the header by means of inlet passages which are selectively covered and uncovered by a rolling diaphragm member as a floating piston member moves within a control cylinder. Such movement of the piston also causes the control cavity to be vented to the atmosphere. Also, the weight of the piston tends to reduce the flow between the control cavity and the vacuum header.

According to the aspect of the present invention, there is provided a device for regulating the flow of fluid from an environment, the environment having a pressure less than the ambient pressure, to an evacuation means, the device consisting of a path, through which the fluid passes from an input in fluid communication with the environment to an output in fluid communication with the evacuation means; a piston movably mounted to a piston mounting structure, the piston being so mounted that it may constrict the path at a constriction point by moving in a direction transverse to the flow of liquid in the path at the constriction point, the piston having (i) a distal face exposed to a reference pressure and (ii) a frontal face; and restoring means for exerting a force on the piston; characterised in that the path is not vented at any point between the input and the output so that the mass of fluid exiting the device through the output is substantially equal to the mass of fluid entering the device from the input, the piston and the piston mounting structure are arranged so that the restoring means includes the weight of the piston so that the weight of the piston tends to widen the path at the constriction point, and the fluid in the path on the environment side of the constriction point flows directly across the frontal face of the piston.

In an embodiment, a venturi is disposed in the path, and the frontal face of the piston forms part of the venturi. The piston has an input end, nearer the input of the device, and an output end, nearer the output of the device and is movably mounted so that as the velocity of the fluid flowing through the path increases the difference between the reference pressure and the pressure in the venturi increases such that the piston tends to move to narrow the venturi. Moreover, the piston is mounted in a hinged fashion at its output end, so that the piston may rotate about a hinge point in such a manner as to alter the width of the venturi.

The present invention solves the problems found in the prior art systems by providing a self-regulating flow control system. Compared to many of the prior art systems, the present invention is not complex and uses few moving parts. A fluid, typically air, a gas or a mixture of gasses, flows through the device from an environment to the evacuation source, e.g. the house exhaust system. The environment has a pressure less than the surrounding ambient pressure. The ambient pressure may be atmospheric pressure or the pressure of the clean room within which the environment is located. The device has a path, through which fluid passes from the input, which is in communication with the environment to the output, which is in communication with the evacuation source, without being vented. Thus, the mass of fluid exiting the device is substantially equal to the mass of fluid entering the device. Within this path, a piston is movably mounted to a piston mounting structure in such a way that the piston may constrict the path at a constriction point. The piston moves in a direction transverse to the flow of fluid in the path at the constriction point. The piston has a distal face exposed to a reference pressure and a frontal face exposed to the fluid in the path on the environment side of the constriction point. In one embodiment, the rigid piston body itself constricts the path. In another embodiment, the rigid piston body has attached thereto a flexible diaphragm that protrudes into the path at the constriction point and that has a movable internal wall attached to the piston and a movable external wall attached to the piston mounting structure. The lengths of these movable walls can vary as the piston moves. A restoring force is exerted on the piston in a direction that tends to move the piston so as to widen the path at the constriction point. The force exerted on the piston by the pressure of the fluid in the path on the evacuation source side of the constriction point is transverse to the direction of movement of the piston, and therefore does not materially affect the operation of the device. Thus, the device is able to accurately control either the partial vacuum or the mass flow rate despite large fluctuations in the vacuum created by the evacuation source. The restoring force and the forces exerted on the piston by the reference pressure and the pressure of the fluid in the path on the environment side of the constriction point are generally parallel to the direction of movement of the piston.

The restoring force can be exerted by a spring, or by the weight of the piston. In a preferred embodiment of the invention, the restoring force is exerted merely by the weight of the piston without the use of a spring or any other means of exerting a force.

In a preferred embodiment of the invention, the reference pressure is equal to the ambient pressure. In this embodiment, the pressure of the fluid in contact with the frontal face of the piston can be directly proportional to the pressure of the fluid in the environment, so that the piston is caused to adjust the size of the path at the constriction point in such a way that a substantially constant partial vacuum is maintained in the environment with respect to the ambient pressure.

This partial vacuum control system embodiment can easily be adapted to become a mass flow control system by simply introducing a throttling valve in the path between the environment and the piston. This throttling valve can be adjustable, thereby changing the cross-sectional area of the path at that point, so that the mass flow rate can be adjusted.

In a preferred embodiment of the invention, the device includes a manifold within which the piston is movably mounted. The manifold has a side wall generally parallel to the direction of movement of the piston. This side wall has disposed therein an evacuation port, located at the constriction point, through which the manifold is in fluid communication with the evacuation means. The manifold also has an environment port through which the manifold is in fluid communication with the environment. This environment port may be located in the side wall as well.

There are several ways of forming a seal between the piston and the piston mounting structure, which may be the manifold. One way of forming such a seal is by using the flexible diaphragm discussed above. Alternatively, the piston and the piston mounting structure can be machined to a fine tolerance such that they fit snugly together, forming a good seal without creating undue friction between the piston and the piston mounting structure. In a preferred embodiment a ferrofluid, an oil-like fluid having magnetic properties, is used to form a seal between the piston and the piston mounting structure. A magnet is mounted on either the piston or the piston mounting structure for holding the ferrofluid in position between the piston and the piston mounting structure.

In an embodiment of the invention that is used to regulate mass flow, a modulator is mounted proximate to the piston for directing the fluid so that the fluid flows transverse to the frontal face of the piston. As the velocity of the fluid moving through the device increases, the force exerted on the frontal face of the piston by the pressure of the fluid in the path decreases, causing the piston to move in the direction to constrict the path at the constriction point.

The device includes a path through which the fluid passes from the input to the output. The path is not vented between the input and the output, so that the mass of fluid passing through the input is essentially equal to the mass of fluid exiting form the output. A venturi may be disposed in this path. Part of the venturi is formed with the frontal face of the piston. The piston has a distal face exposed to the reference pressure, which is preferably the pressure of the fluid at the input. The piston is movably mounted so that as the velocity of the fluid flowing through the path increases, the difference between the reference pressure and the pressure in the venturi increases causing the piston to move in a direction narrowing the venturi. A restoring force is exerted on the piston in the direction that tends to move the piston so as to widen the venturi. The various means of exerting a restoring force discussed above may be applied in this device.

In a preferred embodiment of this venturi device, the piston is hingedly mounted so as to rotate about a hinged point. The piston must still be able to move in such a manner as to narrow or widen the venturi. The piston in this embodiment includes a slidable weight that can be moved closer to or further from the hinge point. By moving this slidable weight the tendency of the piston to move to widen the venturi may be altered. A servo motor may be used to control the position of the slidable weight.

This venturi device regulates the mass flow rate of the fluid by lessening the cross-sectional area of the path as the velocity of the fluid increases. Thus, as the velocity of the fluid increases the cross-sectional area of the path at the point of the venturi decreases, causing a substantially constant mass flow rate. By moving the slidable weight one can set this device to maintain the desired mass flow rate.

### Brief Description of the Drawings

Fig. 1 shows a basic principle of a regulating device according to an embodiment of the invention that has a rolling diaphragm and a spring.

Figs. 2 and 3 show embodiments of the invention that do not use a rolling diaphragm or a spring.

Fig. 4 shows how the devices shown in Figs 1, 2 and 3 can be used to maintain a constant partial vacuum in a work environment with respect to a clean room.

Fig. 5 shows how the devices shown in Figs. 1, 2 and 3 can be adapted to maintain a constant mass flow rate.

Fig. 6 shows another embodiment of the invention that can maintain a constant mass flow rate.

Fig. 6A shows a slightly different version of the Fig. 6 embodiment.

Fig. 7 shows how accurately the Figs. 6 and 6A devices can maintain a constant fluid velocity.

Fig. 8 shows another embodiment of the invention that is used for maintain a constant mass flow rate.

Fig. 9 shows an adjustable version of the Fig. 8 embodiment.

### Description of Specific Embodiments

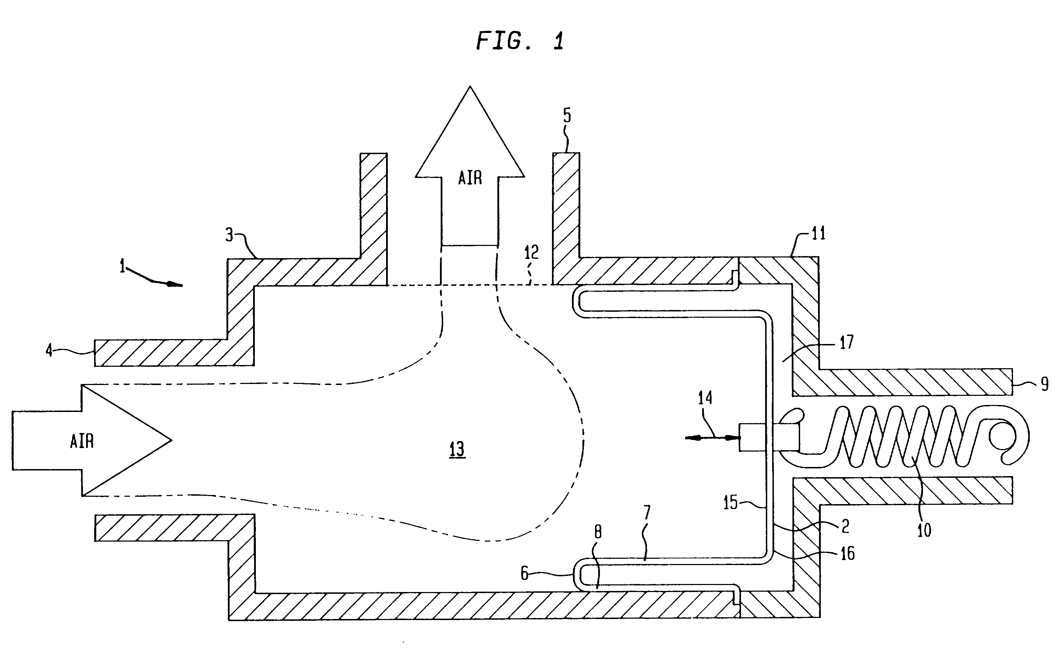

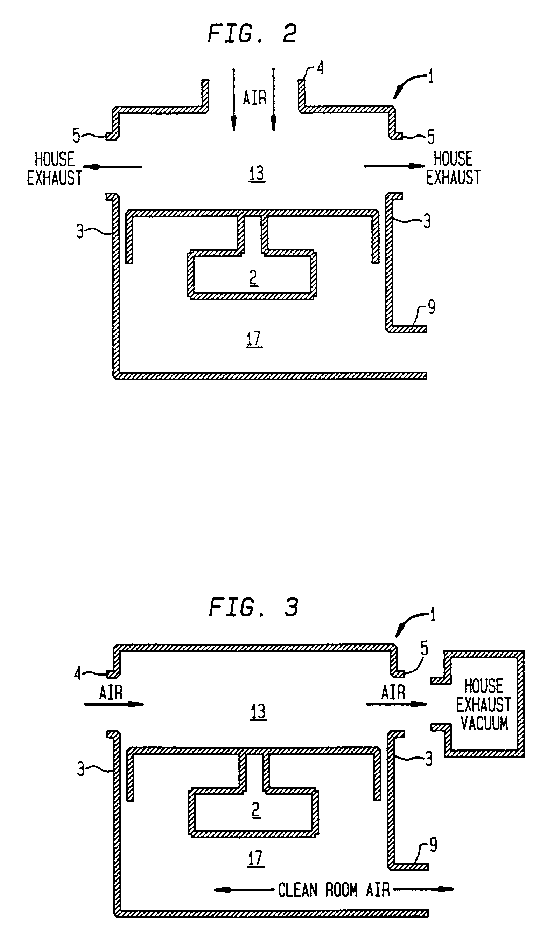

Figure 1 shows a basic principle and figures 2, and 3 show embodiments of the invention that are used to control a partial vacuum in the work environment with respect to the ambient pressure. The device shown in Figure 1 has a manifold 1, which has a piston 2 mounted therein. The side wall 3 of the manifold 1 is substantially parallel to the direction of motion of the piston 2 as shown by the double headed arrow 14. An evacuation port 5, which connects the device to the house exhaust system, i.e. the evacuation source, is disposed in the side wall 3. The manifold 1 also has an environment port 4, which connects the device to the work environment. The piston 2 has attached around the periphery thereof a rolling diaphragm 6 which is also connected to the manifold 1. The rolling diaphragm 6 forms a seal between the piston 2 and the manifold 1. As seen in Figure 1, the diaphragm protrudes into the plenum 13, which is bounded by the manifold 1 and the piston 2. As the piston 2 moves back and forth, the lengths of the inner wall 7 and the outer wall 8 of the diaphragm 6 change. As the piston 2 moves towards the left in the figure, the diaphragm 6 begins to constrict the evacuation port 5. The evacuation port 5 can be covered with a screen 12, upon which the outer wall 8 of the diaphragm 6 can repose.

The piston 2 has two faces, a frontal face 15 exposed to the plenum 13 and a distal face 16 exposed to a reference pressure 9. The piston is attached to a spring 10 that exerts a force on the piston in a direction so as to tend to open the evacuation port 5. An endcap 11 may be attached to the manifold 1 at the point where the diaphragm 6 is attached to the manifold. The endcap and the piston 2 define a chamber 17. The pressure in the chamber 17 is the reference pressure 9. Preferably, the reference pressure 9 is the ambient pressure, e.g. the pressure in the clean room where the work environment is located.

Essentially three forces affect the movement of the piston 2: (i) the pressure of the gas in the plenum 13, (ii) the reference pressure 9 and (iii) the restoring force exerted by the spring 10. Because the evacuation port 5 is transverse to the movement 14 of the piston 2, any force exerted by the house exhaust system does not substantially affect the movement of the piston 2. When the device is at equilibrium, the three forces affecting the movement of the piston balance each other. If the pressure in the plenum 13 decreases, which would occur if the pressure in the work environment decreased or the pressure of the house exhaust system decreased (i.e. when the house exhaust system creates a stronger vacuum), the piston 2 tends to move to the left, thereby causing the evacuation port 5 to be further constricted by the protrusion of the rolling diaphragm 6. Because the evacuation port 5 is constricted, less gas can flow out of the plenum into the house exhaust system, thereby causing the pressure in the plenum to increase. The piston continues to move to the left and the pressure in the plenum 13 continues to increase until the three forces once again offset each other. If the pressure in the plenum increases, which may result from the pressure in the work environment increasing or the vacuum exerted by the house exhaust system weakening, the piston 2 would be forced to the right, opening up the evacuation port 5 and further exposing the plenum 13 to the house exhaust system.

In order to maintain a constant partial vacuum in the work environment with respect to the ambient pressure, one may set the reference pressure equal to the ambient pressure by venting the chamber 17 to the ambient pressure, e.g. the clean room. If the ambient pressure in the clean room increases, the piston 2 will tend to move to the left, further occluding the evacuation port 5, and thereby increasing the pressure in the plenum 13. The increased pressure in the plenum will cause increased pressure in the work environment. Thus, the device insures that as the ambient pressure increases the pressure in the work environment will increase correspondingly so as to maintain a constant partial vacuum.

Figure 2 shows an alternative embodiment of the partial vacuum control system. In this embodiment the environment port 4 is located at the top of the device and there is a plurality of evacuation ports 5 arranged radially around the manifold 1. In this system the piston 2 moves vertically. A rolling diaphragm is not used, so the evacuation ports 5 must be occluded by the rigid portion of the piston 2. Instead of using a spring to exert on the piston a restoring force tending to move the piston to open the evacuation port, this restoring force is exerted simply by the weight of the piston 2. In order to effect a seal between the piston 2 and the side wall 3, the piston 2 and the manifold 1 must be properly toleranced in order to insure a snug fit without creating too much friction between the piston and the manifold. Otherwise, the Figure 1 and Figure 2 embodiments work the same way.

In the Figure 2 embodiment the restoring force may be supplemented by including a spring, so that the restoring force includes both the weight of the piston and the force exerted by the spring. In the Figure 1 embodiment, it is preferred that the spring 10 is linear, i.e. it stretches an amount directly proportional to the force applied. The shape of the evacuation port 5 may be rectangular so that the amount of change in the pressure differential between the plenum 13 and the chamber 17 is directly proportional to the area of the port that is occluded. A non-linear spring could also be used, as could the shape of the evacuation port 5 be changed, so that the system provides non-linear corrections to pressure changes.

Figure 3 shows an embodiment of the vacuum regulator that is very similar to that shown in Figure 2. The difference is that the environment port 4 is disposed in a side wall 3 of the manifold 1, so that as the piston rises it tends to occlude both the environment port 4 as well as the evacuation port 5. The principle of operation of the Figure 3 embodiment is the same as that of the Figures 1 and 2 embodiments. That is, as the pressure in the work environment increases the piston moves so as to open the communication with the house exhaust system, and as the pressure in the work environment decreases the piston moves so as to decrease the communication with the house exhaust system.

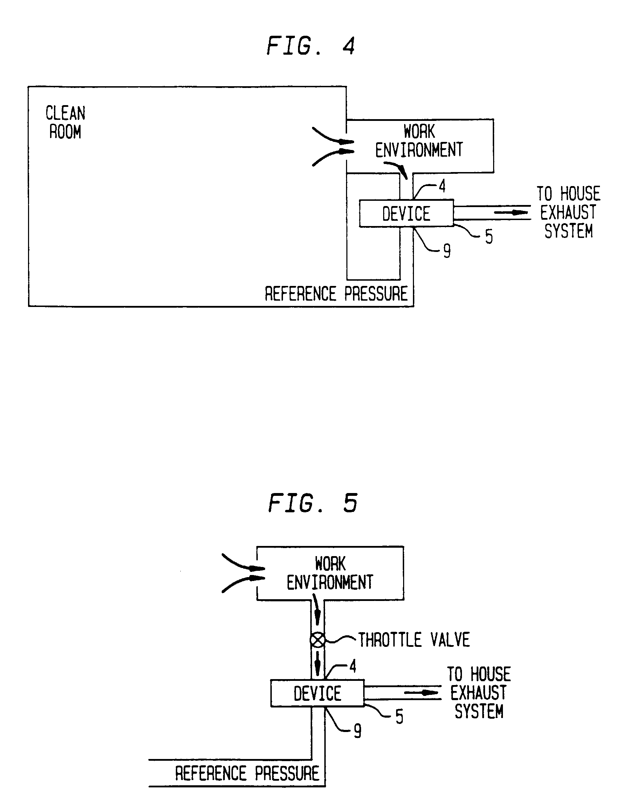

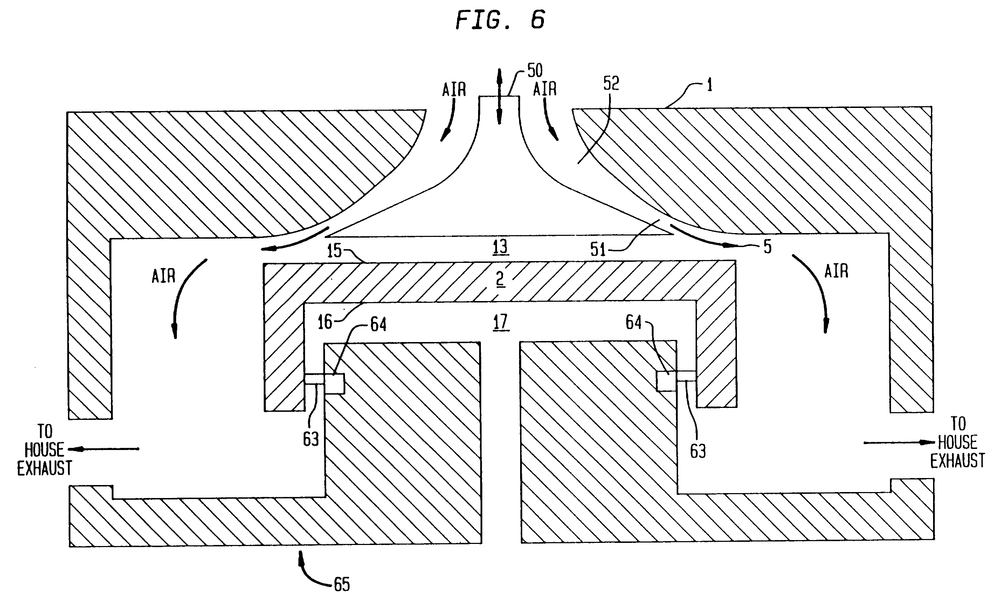

Figure 4 shows how the device is arranged to maintain a constant partial vacuum within a work environment with respect to a clean room. The environment port 4 of the device is connected to the work environment. The evacuation port 5 is connected to the house exhaust system. The ambient pressure of the clean room is used as the reference pressure. With this arrangement, assuming that the house exhaust system is providing a strong enough vacuum, the pressure in the work environment should be less than the ambient pressure of the clean room by a substantially constant amount.

Figure 5 shows how the devices of Figures 1, 2, and 3 can be adapted to regulate the mass flow rate from a work environment to the house exhaust system. This is accomplished by simply placing a throttling valve, which constricts the cross-sectional area of the fluid flow path, between the work environment and the environment port 4 of the device. Because the pressure drop across the throttling valve is relatively large, the reference pressure may be the pressure in the work environments.

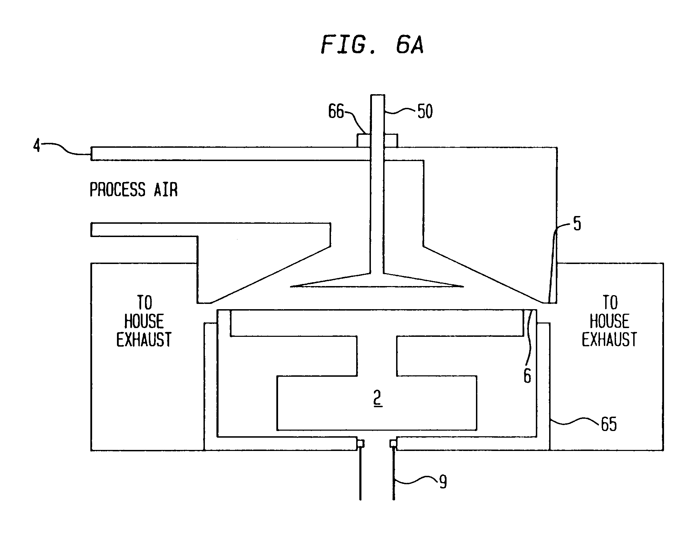

Figure 6 shows a device that regulates the mass flow rate of fluid flowing through the device. Like the devices described above, this device has a piston 2 with a frontal face 15 exposed to a plenum 13 and a distal face 16 exposed to a chamber 17. The chamber 17 has a reference pressure, which is preferably the ambient pressure. The device also has an environment port 4 for connecting the device to the work environment, and an evacuation port 5, through which the fluid flows to the house exhaust and which is constricted by the piston 2 as the piston moves up. This device uses a modulator 50 which directs the fluid flowing from the environment port 4 to the evacuation port 5, such that the fluid flows transversely across the frontal face 15 of the piston 2. The modulator 50 and the manifold 1 form an annular channel 52, which directs the fluid flowing vertically downward so that the fluid flows outwardly and substantially horizontally. This channel 52 is preferably curved as shown in Figure 6. It is also preferred that the channel taper 5 to a narrow opening 51; otherwise the expanding annular channel would cause the fluid to lose its velocity. By tapering the channel 52 the velocity of the fluid is preserved. As the fluid flows out of the channel 52 and across the edge of the piston, the Bernoulli effect causes the pressure in the plenum 13 to drop, thereby lifting the piston 2. If the velocity of the fluid increases, the pressure in the plenum 13 will drop further, causing the piston to rise further, and in turn further constricting the evacuation port 5. By constricting the evacuation port 5 the flow of the fluid is retarded. If the velocity of the fluid through the device decreases the pressure in the plenum 13 should thereby increase causing the piston to drop, and in turn causing the evacuation port to open. Thus, the velocity and therefore the mass flow rate of the fluid through the system can be kept fairly constant by the device.

The desired flow rate through the device can be altered by moving the modulator up and down. Moving the modulator up and down affects the size of the annular channel 52.

In order to obtain a seal between the piston 2 and the piston mounting structure 65, the piston and the piston supporting structure can be made to fit snugly against each other, or a diaphragm can be used. Another means of achieving a seal is to use a ferrofluid, which is an oil-like fluid with magnetic properties. A magnet 64 is placed around the piston supporting structure 65 proximate the piston 2, or alternately around the piston 2 proximate to the supporting structure 65. This magnet 64 holds the ferrofluid 63 in place.

Figure 6A shows a variation of the Figure 6 device. In this embodiment the piston 2 is located inside the piston mounting structure 65. A diaphragm 6 serves as a seal between the piston 2 and the piston mounting structure. The modulator 50 is held in place by a locking device 66.

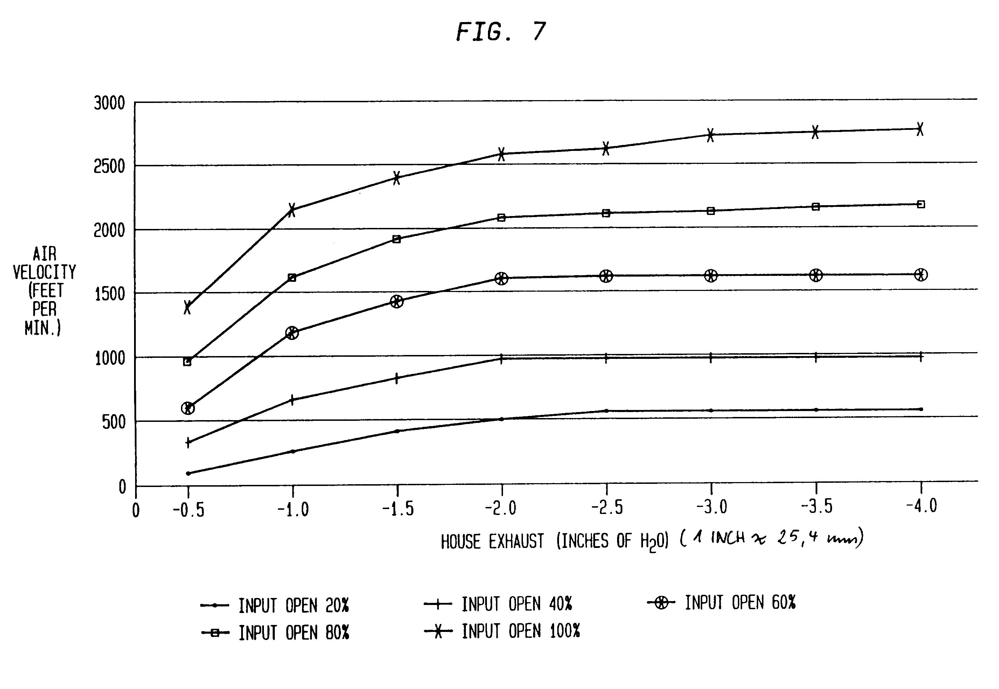

Figure 7 shows how accurately the mass flow controllers shown in Figures 6 and 6A can regulate the air velocity despite wide variations in the strength of the vacuum provided by the house exhaust system. The desired air velocity can be obtained by adjusting the position of the modulator. The graph shows the results with the modulator in five different positions corresponding to different sizes in the input opening. As can be seen in the graph, as long as there is a sufficient vacuum created by the house exhaust, approximately -2.0 inches (≈50,8mm) of water, the air velocity remains quite constant, especially when the input is not open all the way.

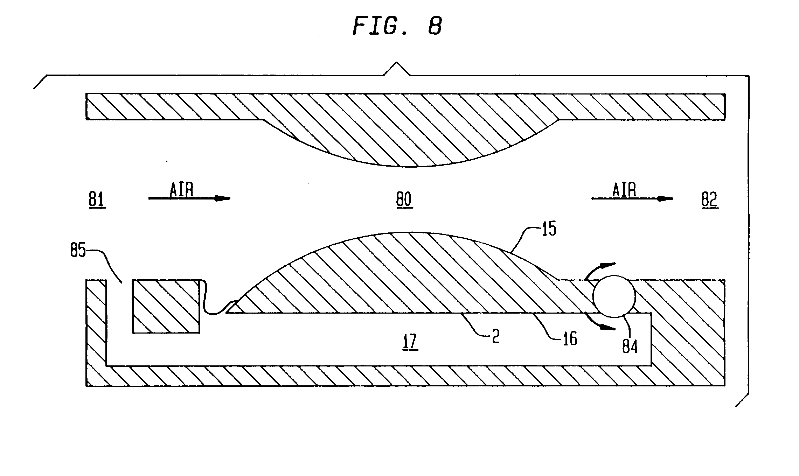

Figure 8 shows another mass flow regulator. In this device fluid flows from the input 81, through a venturi valve 80, to an output 82. Part of the venturi is made of a movable piston 2, which may move up to narrow the venturi or move down to widen the venturi. Preferably, the piston 2 is attached to the body of the device by a hinge 84 located near the output 82 of the device. This allows the piston to swing up or down. The lower face of the piston 2, the distal face 16, is exposed to a chamber 17 having a reference pressure. Preferably, this chamber 17 is vented to the input 81 by means of a port 85, such that the reference pressure is equal to the pressure of the fluid at the input 81. As the fluid flows through the device, the pressure in the venturi decreases because of the Bernoulli effect. This causes the piston 2 to tend to move up to narrow the venturi. The weight of the piston 2 tends to pull the piston downward. Another means of exerting a downward force on the piston 2, i.e. a restoring force, would be with a spring. The force exerted by the weight of the piston, or other restoring force, balances with the force caused by the pressure differential between the chamber 17 and the venturi 80, causing the piston to float (assuming the velocity of the fluid is great enough). As the velocity of the fluid increases, the pressure in the venturi, 80 will further decrease causing the piston to rise further. Thus, the cross-sectional area of the venturi 80 decreases. Since the mass flow rate of the fluid is equal to the product of the fluid's density, the cross-sectional area of the pathway and the velocity of the fluid, the mass flow rate should remain fairly constant, i.e. the increased velocity is offset by the decreased cross-sectional area.

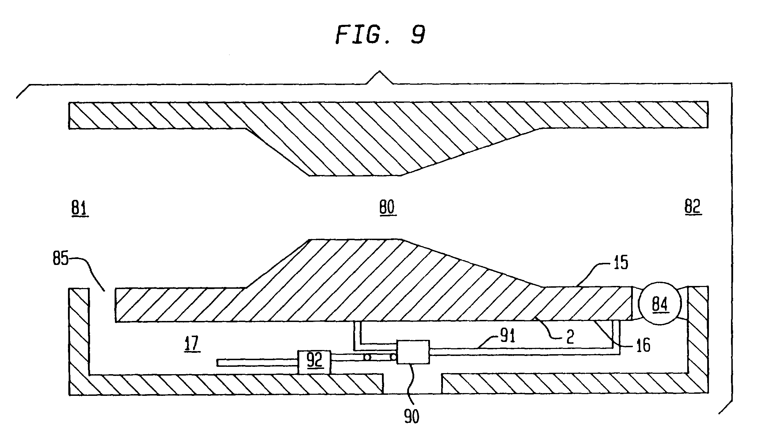

Figure 9 shows a modified version of the Figure 8 device, wherein the device can be adjusted to attain various mass flow rates. This is done by using a slidable mass 90. The further to the left and away from the hinge 84 the mass 90 is located, the greater the tendency of the piston to move down and widen the venturi. The further to the right and closer to the hinge 84 the mass 90 is placed, the greater the tendency of the piston to rise and narrow the venturi. Thus, the desired mass flow rate can be increased by moving the mass 90 to the left, or decreased by moving the mass to the right. The movement of the mass can, of course, be accomplished manually; however, it can be accomplished remotely by using a servo motor 92 which can move the mass 90 back and forth. The servo motor can then be controlled electrically.

## Claims

1. A device for regulating the flow of fluid from an environment, the environment having a pressure less than the ambient pressure, to an evacuation means, the device consisting of a path, through which the fluid passes from an input (4,81) in fluid communication with the environment to an output (5,82) in fluid communication with the evacuation means; a piston (2) movably mounted to a piston mounting structure (65), the piston (2) being so mounted that it may constrict the path at a constriction point (5,80) by moving in a direction transverse to the flow of liquid in the path at the constriction point, the piston having (i) a distal face (16) exposed to a reference pressure and (ii) a frontal face (15); and restoring means for exerting a force on the piston (2);
characterised in that
the path is not vented at any point between the input (4) and the output so that the mass of fluid exiting the device through the output is substantially equal to the mass of fluid entering the device from the input (4),
the piston (2) and the piston mounting structure (65) are arranged so that the restoring means includes the weight of the piston (2) so that the weight of the piston tends to widen the path at the constriction point, and
the fluid in the path on the environment side of the constriction point flows directly across the frontal face (15) of the piston.

2. The device according to claim 1, in which the restoring means further includes a spring (10).

3. The device according to claim 1 in which the restoring means consists only of the weight of the piston (2).

4. The device according to any one of claims 1 to 3, in which the reference pressure is equal to the ambient pressure.

5. The device according to any one of claims 1 to 4, in which the pressure of the fluid in the path in contact with the frontal face (15) of the piston (2) is directly proportional to the pressure of the fluid in the environment, so that the piston (2) is caused to adjust the size of the path at the constriction point in such a way that a substantially constant partial vacuum is maintained in the environment with respect to the ambient pressure.

6. The device according to any one of claims 1 to 4, in which a throttling valve is disposed in the path between the environment and the piston (2), for constricting the path, such that a substantially constant fluid mass flow rate through the device may be maintained.

7. The device according to claim 6, in which the throttling valve is adjustable so that the amount in that the path is constricted between the environment and the piston may be changed.

8. The device according to any preceding claim, in which a manifold (1) is disposed in the path, the piston (2) being movably mounted in the manifold (1), the manifold (1) including the piston mounting structure (65) and side wall (3) generally parallel to the direction of movement of the piston, an environment port (4) through which the manifold (1) is in fluid communication with the environment, and an evacuation port (5) located in the side wall (3) at the constriction point, through which the manifold (1) is in fluid communication with the evacuation means.

9. The device according to claim 8, in which the environment port (4) is located in the side wall (3).

10. The device according to any preceding claim, including a flexible diaphragm (6) adapted to be able to protrude into the path at the constriction point and having a moveable internal wall (7) attached to the piston (2) and a moveable external wall (8) attached to the piston mounting structure, wherein the lengths of the moveable walls can vary as the piston (2) moves.

11. The device according to claim 10, in which the piston (2) includes a relatively rigid central portion, to which the flexible diaphragm (6) is attached along the periphery of the piston (2), and the piston (2) is disposed in the device so that the flexible diaphragm (6) forms a peripherally disposed protrusion along the side wall (3) of the manifold.

12. The device according to claim 11, including a screen (12), covering the evacuation port (5) and on which a portion of the external wall (8) of the diaphragm (6) may repose when the port (5) is being occluded in whole or in part.

13. The device according to any preceding claim, including a modulator (50) mounted proximate to the piston (2) for directing the fluid so that the fluid flows transverse to the frontal face (15) of the piston (2), so that, as the velocity of the fluid moving through the device increases, the force exerted on the frontal face (15) of the piston (2) by the pressure of the fluid in the path decreases, so that the piston (2) tends to move to further constrict the path at the constriction point.

14. The device according to any preceding claim, including a ferrofluid (63) forming a seal between the piston (2) and the piston mounting structure (65), and a magnet (64), mounted on either the piston (2) or the piston mounting structure (65), for holding the ferrofluid in a position to form the seal.

15. The device as claimed in claim 1 wherein the frontal face (15) of the piston (2) forms part of a venturi and the piston has an input end, nearer the input of the device, and an output end, nearer the output of the device wherein the piston is movably mounted so that as the velocity of the fluid flowing through the path increases the difference between the reference pressure and the pressure in the venturi increases such that the piston tends to move to narrow the venturi, the piston being hingedly mounted at its output end, so that the piston may rotate about a hinge point (84) in such a manner as to alter the width of the venturi.

16. The device of claim 15, wherein the restoring means consists only of the weight of the piston.

17. The device of claim 15 or 16, wherein the reference pressure is equal to the pressure of the fluid at the input of the device.

18. The device of any one of claims 15-17, wherein the piston includes a slidable weight (90) that may be moved closer toward or further from the hinge point so as to decrease or increase the tendency of the piston to widen the venturi.

19. The device of claim 18, including movement means (92) for controlling the position of the slidable weight (90) with respect to the hinge point.

## Patentansprüche

1. Vorrichtung zur Regelung des Fluidflusses von einem Umfeld zu einer Absaugeinrichtung, wobei das Umfeld aufweist:
einen Druck, der unter dem Umgebungsdruck liegt, wobei die Vorrichtung aus einem Streckenabschnitt besteht, durch den sich das Fluid von einem Eingang (4, 81) in Fluidverbindung mit dem Umfeld zu einem Ausgang (5, 82) in Fluidverbindung mit der Absaugeinrichtung bewegt;
einen Kolben (2), der auf einer Kolbenbefestigungsanordnung (65) bewegbar befestigt ist, wobei der Kolben (2) so befestigt ist, daß er den Streckenabschnitt an einem Verengungspunkt (5, 80) verengen kann, indem er sich an dem Verengungspunkt in einer quer zum Flüssigkeitsfluß in dem Streckenabschnitt gerichteten Richtung bewegt, wobei der Kolben (i) eine abgewandte Seite (16), die einem Referenzdruck ausgesetzt ist, und (ii) eine vordere Seite (15) aufweist, und
eine Rückstellvorrichtung, um auf den Kolben (2) eine Kraft auszuüben;
dadurch gekennzeichnet, daß
der Streckenabschnitt an keinem Punkt zwischen dem Eingang (4) und dem Ausgang entlüftet wird, derart, daß die Fluidmasse, die die Vorrichtung durch den Ausgang verläßt, im wesentlichen der Fluidmasse entspricht, die in die Vorrichtung durch den Eingang (4) eintritt,
der Kolben (2) und die Kolbenbefestigungsanordnung (65) so angeordnet sind, daß die Rückstellvorrichtung das Gewicht des Kolbens (2) beinhaltet, derart, daß das Gewicht des Kolbens dazu neigt, den Streckenabschnitt an dem Verengungspunkt zu erweitern, und
das Fluid im Streckenabschnitt auf der Umfeldseite des Verengungspunktes direkt über die vordere Seite (15) des Kolbens fließt.

2. Vorrichtung nach Anspruch 1, wobei die Rückstellvorrichtung ferner eine Feder (10) aufweist.

3. Vorrichtung nach Anspruch 1, wobei die Rückstellvorrichtung lediglich aus dem Gewicht des Kolbens (2) besteht.

4. Vorrichtung nach einem der Ansprüche 1 bis 3, wobei der Referenzdruck dem Umgebungsdruck entspricht.

5. Vorrichtung nach einem der Ansprüche 1 bis 4, wobei der Druck des Fluids im Streckenabschnitt, das mit der vorderen Seite (15) des Kolbens (2) in Kontakt steht, zum Druck des Fluids im Umfeld direkt proportional ist, derart, daß der Kolben (2) veranlaßt wird, sich an dem Verengungspunkt in einer Weise der Form des Streckenabschnittes anzupassen, daß ein im wesentlichen konstanter Teilunterdruck im Umfeld im Vergleich zum Umgebungsdruck aufrechterhalten wird.

6. Vorrichtung nach einem der Ansprüche 1 bis 4, wobei ein Drosselventil im Streckenabschnitt zwischen dem Umfeld und dem Kolben (2) vorgesehen ist, um den Streckenabschnitt so zu verengen, daß eine im wesentlichen konstante Fluidmassendurchflußrate durch die Vorrichtung aufrechterhalten werden kann.

7. Vorrichtung nach Anspruch 6, wobei das Drosselventil so einstellbar ist, daß das Ausmaß, in dem der Streckenabschnitt zwischen dem Umfeld und dem Kolben verengt wird, verändert werden kann.

8. Vorrichtung nach einem der vorhergehenden Ansprüche, wobei ein Verteiler (1) im Streckenabschnitt vorgesehen ist, wobei der Kolben (2) in dem Verteiler (1) bewegbar angebracht ist, wobei der Verteiler (1) die Kolbenbefestigungsanordnung (65) und eine im allgemeinen parallel zur Bewegungsrichtung des Kolbens verlaufende Seitenwand (3), eine Umfeldöffnung (4), durch die der Verteiler (1) in einer Fluidverbindung mit dem Umfeld steht, und eine in der Seitenwand (3) am Verengungspunkt befindliche Absaugöffnung (5), durch die sich der Verteiler in einer Fluidverbindung mit der Absaugeinrichtung befindet, aufweist.

9. Vorrichtung nach Anspruch 8, wobei die Umfeldöffnung (4) sich in der Seitenwand (3) befindet.

10. Vorrichtung nach einem der vorhergehenden Ansprüche, mit einer flexiblen Membran (6), die in der Lage ist, am Verengungspunkt in den Streckenabschnitt hineinragen zu können, und die eine bewegliche Innenwand (7), die mit dem Kolben (2) verbunden ist, und eine bewegliche Außenwand (8), die mit der Kolbenbefestigungsanordnung verbunden ist, aufweist, wobei die Länge der beweglichen Wände mit den Bewegungen des Kolbens (2) variieren kann.

11. Vorrichtung nach Anspruch 10, wobei der Kolben (2) ein relativ starres Mittelteil aufweist, an dem die flexible Membran (6) entlang der Peripherie des Kolbens (2) angebracht ist, und der Kolben (2) in der Vorrichtung so angebracht ist, daß die flexible Membran (6) einen peripher angebrachten Vorsprung entlang der Seitenwand (3) des Verteilers bildet.

12. Vorrichtung nach Anspruch 11, die eine Abschirmung (12) aufweist, die die Absaugöffnung (5) abdeckt und auf die sich ein Teil der Außenwand (8) der Membran (6) stützen kann, wenn die Öffnung (5) ganz oder teilweise geschlossen ist.

13. Vorrichtung nach einem der vorhergehenden Ansprüche, die einen Modulator (50) aufweist, der in der Nähe des Kolbens (2) angebracht ist, um das Fluid so zu lenken, daß das Fluid quer zur vorderen Seite (15) des Kolbens (2) fließt, so daß, wenn sich die Geschwindigkeit des sich durch die Vorrichtung bewegenden Fluids erhöht, sich die auf die vordere Seite (15) des Kolbens (2) durch den Druck des Fluids im Streckenabschnitt ausgeübte Kraft so verringert, daß der Kolben (2) dazu neigt, sich zu bewegen, um den Streckenabschnitt am Verengungspunkt weiter zu verengen.

14. Vorrichtung nach einem der vorhergehenden Ansprüche, die ein Ferrofluid (63), das zwischen dem Kolben (2) und der Kolbenbefestigungsanordnung (65) einen Verschluß bildet, und einen Magneten (64), der entweder auf dem Kolben (2) oder der Kolbenbefestigungsanordnung (65) angebracht ist, um das Ferrofluid in einer Position zum Bilden eines Verschlusses zu halten, aufweist.

15. Vorrichtung nach Anspruch 1, wobei die vordere Seite (15) des Kolbens (2) Teil eines Lufttrichters ist und der Kolben ein Eingangsende, das sich näher beim Eingang der Vorrichtung befindet, und ein Ausgangsende, das sich näher beim Ausgang der Vorrichtung befindet, aufweist, wobei der Kolben bewegbar angebracht ist, derart, daß, wenn die Geschwindigkeit des durch den Streckenabschnitt fließenden Fluids zunimmt, die Differenz zwischen dem Referenzdruck und dem Druck im Lufttrichter derart zunimmt, daß der Kolben dazu neigt, sich zu bewegen, um den Lufttrichter zu verengen, wobei der Kolben an seinem Ausgangsende derart schwenkbar angebracht ist, daß der Kolben sich um einen Gelenkpunkt (84) in einer derartigen Weise drehen kann, daß die Breite des Lufttrichters verändert wird.

16. Vorrichtung nach Anspruch 15, wobei die Rückstellvorrichtung lediglich aus dem Gewicht des Kolbens besteht.

17. Vorrichtung nach Anspruch 15 oder 16, wobei der Referenzdruck dem Druck des Fluids am Eingang der Vorrichtung entspricht.

18. Vorrichtung nach einem der Ansprüche 15-17, wobei der Kolben ein gleitbares Gewicht (90) umfaßt, das derart auf den Gelenkpunkt zu oder von ihm weg bewegt werden kann, daß die Fähigkeit des Kolbens, den Lufttrichter zu erweitern, verstärkt oder verringert werden kann.

19. Vorrichtung nach Anspruch 18, die eine Antriebsvorrichtung (92) aufweist, um die Position des gleitbaren Gewichts (90) in Bezug zum Gelenkpunkt zu steuern.

## Revendications

1. Dispositif pour la régulation du débit de fluide allant d'un environnement, cet environnement ayant une pression inférieure à la pression ambiante, à un moyen d'aspiration, le dispositif étant constitué par un passage, dans lequel le fluide passe d'une entrée (4, 81) qui est en communication fluidique avec l'environnement à une sortie (5, 82) qui est en communication fluidique avec le moyen d'aspiration ; un piston (2) monté mobile sur une structure (65) de montage de piston, le piston (2) étant monté de manière qu'il puisse étrangler le passage à un point d'étranglement (5, 80) en se déplaçant dans une direction transversale à l'écoulement de liquide dans le passage au point d'étranglement, le piston ayant (i) une face distale (16) exposée à une pression de référence et (ii) une face frontale (15) ; et des moyens de rappel destinés à exercer une force sur le piston (2), caractérisé en ce que
le passage n'est pas mis à l'échappement entre l'entrée (4) et la sortie, de sorte que la masse de fluide qui sort du dispositif à travers la sortie est pratiquement égale à la masse de fluide entrant dans le dispositif par l'entrée (4),
le piston (2) et la structure (65) de montage sont agencés de manière que les moyens de rappel comprennent le poids du piston (2), de sorte que le poids du piston tend à élargir le passage au point d'étranglement, et
le fluide contenu dans le passage et sur le côté environnant du point d'étranglement s'écoule directement en travers de la face frontale (15) du piston.

2. Dispositif selon la revendication 1, dans lequel les moyens de rappel comprennent en outre un ressort (10).

3. Dispositif selon la revendication 1, dans lequel les moyens de rappel sont exclusivement constitués par le poids du piston (2).

4. Dispositif selon une quelconque des revendications 1 à 3, dans lequel la pression de référence est égale à la pression ambiante.

5. Dispositif selon une quelconque des revendications 1 à 4, dans lequel la pression du fluide dans le passage, en contact avec la face frontale (15) du piston (2) est directement proportionnelle à la pression du fluide dans l'environnement, de sorte que le piston (2) est amené à ajuster la dimension du passage au point d'étranglement de manière qu'un vide partiel sensiblement constant soit maintenu dans l'environnement, par rapport à la pression ambiante.

6. Dispositif selon une quelconque des revendications 1 à 4, dans lequel une soupape d'étranglement est disposée dans le passage entre l'environnement et le piston (2) pour étrangler le passage, et de manière à permettre de maintenir un débit massique du fluide à peu près constant à travers le dispositif.

7. Dispositif selon la revendication 5, dans lequel la soupape d'étranglement est réglable de sorte que le degré auquel le passage est étranglé entre l'environnement et le piston peut être modifié.

8. Dispositif selon une quelconque des revendications précédentes, dans lequel un collecteur (1) est disposé dans le passage, le piston (2) étant monté mobile dans le collecteur (1), le collecteur (1) comprenant la structure (65) de montage du piston et la paroi latérale (3) à peu près parallèle à la direction du mouvement du piston, un orifice d'environnement (4) à travers lequel le collecteur (1) est en communication fluidique avec l'environnement, et un orifice d'aspiration (5) prévu dans la paroi latérale (3) au point d'étranglement, et à travers lequel le collecteur (1) est en communication fluidique avec le moyen d'aspiration.

9. Dispositif selon la revendication 8, dans lequel l'orifice d'environnement (4) est prévu dans la paroi latérale (3).

10. Dispositif selon une quelconque des revendications précédentes, comprenant un diaphragme flexible (6) adapté pour être capable de s'avancer dans le passage au point d'étranglement et possédant une paroi interne mobile (7) fixé au piston (2) et une paroi externe mobile (8) fixée à la structure de montage du piston, dans laquelle les longueurs des parois mobiles peuvent varier lorsque le piston (2) se déplace.

11. Dispositif selon la revendication 10, dans lequel le piston (2) comprend une portion centrale relativement rigide à laquelle le diaphragme flexible (6) est attaché le long de la périphérie du piston (2), et le piston (2) est disposé dans le dispositif de telle manière que le diaphragme flexible (6) forme une saillie disposée selon la périphérie le long de la paroi latérale (3) du collecteur.

12. Dispositif selon la revendication 11, comprenant une grille (12), qui recouvre l'orifice d'aspiration (5) et sur laquelle une portion de la paroi extérieure (8) du diaphragme (6) peut s'appuyer lorsque l'orifice (5) est obturé en totalité ou en partie.

13. Dispositif selon une quelconque des revendications précédentes, comprenant un modulateur (50) monté à proximité du piston (2) pour diriger le fluide de telle manière que le fluide s'écoule en travers de la face frontale (15) du piston (2), de sorte que, lorsque la vitesse du fluide qui travers le dispositif croit, la force exercée sur la face frontale (15) du piston (2) par la pression du fluide dans le passage décroisse, de manière que le piston (2) tende à se déplacer pour étrangler davantage le passage au point d'étranglement.

14. Dispositif selon une quelconque des revendications précédentes, comprenant un ferrofluide (63) qui forme un joint étanche entre le piston (2) et la structure (65) de montage du piston, et un aimant (64), monté soit sur le piston (2) soit sur la structure (65) du montage du piston pour maintenir le ferrofluide dans une position appropriée pour former le joint étanche.

15. Dispositif selon la revendication 1, dans lequel la face frontale (15) du piston (2) fait partie d'un venturi et le piston possède une extrémité d'entrée plus rapprochée de l'entrée du dispositif, et une extrémité de sortie, plus rapprochée de la sortie du dispositif dans lequel le piston est monté mobile, de sorte que, lorsque la vitesse du fluide qui circule dans le passage croît, la différence entre la pression de référence et la pression dans le venturi croît, de sorte que le piston tend à se déplacer pour rétrécir le venturi, le piston étant monté à charnière à son extrémité de sortie, de sorte que le piston peut tourner autour d'un point de charnière (84) de manière à modifier la largeur du venturi.

16. Dispositif selon la revendication 15, dans lequel les moyens de rappel sont exclusivement constitués par le poids du piston.

17. Dispositif selon la revendication 15 ou 16, dans lequel la pression de référence est égale à la pression du fluide à l'entrée du dispositif.

18. Dispositif selon une quelconque des revendications 15 à 17, dans lequel le piston comprend un poids coulissant (90) qu'on peut rapprocher ou éloigner du point de charnière de façon à réduire ou augmenter la tendance du piston à élargir le venturi.

19. Dispositif selon la revendication 18, comprenant des moyens de déplacement (92) permettant de commander la position du poids coulissant (90) par rapport au point de charnière.
